# EUROPEAN PATENT APPLICATION

(11) **EP 4 393 355 A1**
(43) Date of publication of application: **03.07.2024**
(21) Application number: 23214271.1
(22) Date of filing: 05.12.2023
(51) Int. Cl.: A47J 29/02, A23L 5/10, A47J 37/10

(54) **AUTOMATIC EGG FRYING MECHANISM WITH FLIPPING FUNCTION**

(30) Priority: 20.12.2022 CN 202211641165
(71) Applicant: Dongguan Yuwei Food Machinery Technology Co., Ltd, Dongguan City, Guangdong Province (CN)
(72) Inventor: ZHOU, Yujian, Shaoyang (CN)
(74) Representative: Zaboliene, Reda

(57) **Abstract**

Disclosed in the present disclosure is an automatic egg frying mechanism with a flipping function, which aims at solving the technical problems that the egg frying condition fails to be observed and the actions of flipping eggs and taking out the eggs from a pan are complicated in the prior art. The automatic egg frying mechanism with a flipping function includes a fixing plate, where an upper pan and a lower pan are fixedly arranged on the fixing plate, egg outlets are formed in the upper pan and the low pan, and the egg outlet of the upper pan is positioned above the lower pan. Moreover, an upper spatula is arranged in the upper pan, and a lower spatula is arranged in the lower pan. Compared with the prior art, in the present disclosure, the egg frying condition can be observed, eggs are flipped and taken out of the pan without manual operation or complex apparatuses, and used parts are simple and convenient to assemble, such that an egg frying speed is improved, and egg frying time is saved.

## Description

### TECHNICAL FIELD

The present disclosure belongs to the technical field of egg frying machines, and particularly relates to an automatic egg frying mechanism with a flipping function.

### BACKGROUND

Egg frying machines are quite common in many catering facilities and places such as school canteens, which can satisfy people's huge demand for fried eggs. However, most egg frying machines on the market have the following problems in use:
1. For example, in the patent No. CN211270237U, a heating element is arranged in a frying pan assembly, and an upper heating assembly is further arranged right above the frying pan assembly, such that eggs in the frying pan are heated from above and below in this way. The frying pan rotates by 180 degrees, such that the eggs in the frying pan fall from the frying pan into a dish right below the frying pan. However, since egg frying is performed in a closed environment, the egg frying condition cannot be observed, and time needs to be strictly controlled, otherwise the fried egg may be aged, which affects the taste. The yellowish skin or burnt phenomena may also appear, which affects the appearance, and is not conducive to sales.
2. For example, in the patent No. CN202010043338.0, when eggs are cooked well, an ejection motor is started to rotate an incomplete gear, such that an ejection block is driven to move downwards, thereby compressing an ejection spring. Since the incomplete gear has incomplete teeth, when the incomplete gear rotates to the portion without teeth, the ejection block will be released. Under an action of the ejection spring, the ejection block impacts a sliding condensation module, such that the eggs in a heating module are bounced up by means of a frying pan support, so as to achieve the effect of taking out the eggs from the pan. The process of flipping the eggs and taking out the eggs from the pan requires more apparatus parts and complicated assembly, and more actions of taking out the eggs from the pan cause much time waste and low egg frying efficiency.

### SUMMARY

### (1) Technical problems to be solved

In view of the defects of the prior art, an objective of the present disclosure is to provide an automatic egg frying mechanism with a flipping function so as to solve the technical problems that the egg frying condition cannot be observed and the actions of flipping eggs and taking out the eggs from a pan are complicated in the prior art.

### (2) Technical solutions

To solve the above technical problems, the present disclosure provides an automatic egg frying mechanism with a flipping function. The automatic egg frying mechanism with a flipping function includes a fixing plate, where an upper pan and a lower pan are fixedly arranged on the fixing plate, egg outlets are formed in the upper pan and the low pan, and the egg outlet of the upper pan is positioned above the lower pan. An upper spatula is arranged in the upper pan, and when the upper spatula is pushed to push fried eggs from the egg outlet of the upper pan to the lower pan, the fried eggs naturally fall down to achieve flipping.

### (3) Beneficial effects

Compared with the prior art, the present disclosure has the beneficial effects as follows:
1. The present disclosure is provided with the upper pan and the lower pan, each of which is provided without blocking wall on one side, the side of the upper pan without the blocking wall is positioned above the lower pan, and the upper spatula is arranged in the upper pan. Moreover, a lower spatula is arranged in the lower pan, and the upper spatula and the lower spatula move simultaneously. Heating pipe holes are formed in lower portions of the upper pan and the lower pan, heating pipes are inserted into the heating pipe holes to directly heat egg frying surfaces for egg frying, and frying time of eggs in the upper pan and the lower pan is controlled simultaneously by controlling the two heating pipes, such that the eggs are flipped and taken out from the pan without manual operation or complex apparatuses. Used parts are simple and convenient to assemble, and the effect of manual egg frying can be simulated to a great extent. The shape and taste of the fried eggs are very close to those made by manual operation, egg frying efficiency is improved while the cooking degree, taste and appearance of the fried eggs are guaranteed, and egg frying time is saved.

### BRIEF DESCRIPTION OF THE DRAWINGS

FIG. 1 is a three-dimensional diagram of an upper pan and a lower pan of the present disclosure.
FIG. 2 is a three-dimensional structural diagram of an automatic egg frying mechanism with a flipping function in Example 1 of the present disclosure.
FIG. 3 is a three-dimensional structural diagram of an upper spatula and a lower spatula of the present disclosure.
FIG. 4 is a schematic diagram of a moving process in which an upper spatula passes through an upper lifting avoidance device.
FIG. 5 is a sectional view of an upper pan and a lower pan of the present disclosure.
FIG. 6 is an enlarged diagram of a portion A in FIG. 3 of the present disclosure.
FIG. 7 is a schematic diagram showing an egg positioned in an egg frying surface of an upper pan in Example 1 of the present disclosure.
FIG. 8 is a schematic diagram showing an egg falling from an upper pan into a lower pan in Example 1 of the present disclosure.
FIG. 9 is a sectional view of an upper pan and a lower pan in Example 2 of the present disclosure.

Reference numerals in the figures are as follows: 1-fixing plate; 11-through hole; 12-strip hole I; 13-strip hole II; 2-upper pan; 3-lower pan; 4-upper spatula; 41-upper spatula plate; 5-lower spatula; 51-lower spatula plate; 6-blocking wall; 61-U-shaped opening; 7-driving member; 71-sliding block; 711-spring I; 712-spring II; 72-upper lifting avoidance device; 721-position-avoiding plate; 722-swing arm; 723-elastic sheet; 724-position-avoiding groove; 725-roller; 726-notch I; 727-notch II; 728-position-avoiding inclined plane; 729-guide surface I; 73-lower lifting avoidance device; 8-egg frying surface; 81-oil guide portion; and 10-heating pipe hole.

### DETAILED DESCRIPTION OF EMBODIMENTS

The technical solutions in the examples of the present disclosure will be clearly and completely described below with reference to the accompanying drawings in the examples of the present disclosure.

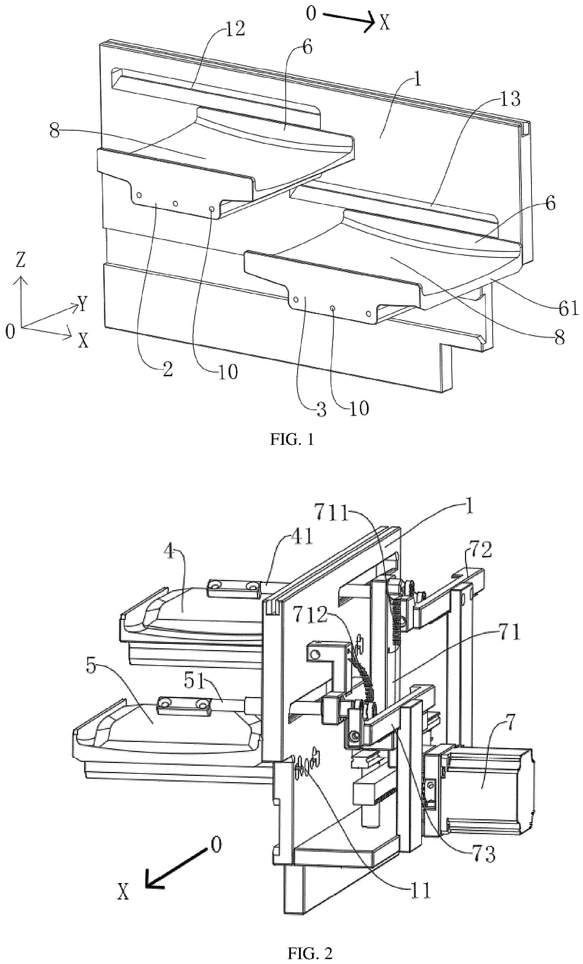

See FIGs. 1-9 for reference.

For the sake of clarity, directional terms "0-X","0-Y" and "0-Z" are used here for conveniently distinguishing directions of movement of various parts and a trend of an arc of an egg frying surface, which are represented by coordinate axes in FIG. 1.

**Example 1** As shown in FIGs. 1-3, an automatic egg frying mechanism with a flipping function includes a fixing plate 1, where an upper pan 2 and a lower pan 3 are fixedly arranged on the fixing plate 1, egg outlets are formed in the upper pan 2 and the low pan 3, and the egg outlet of the upper pan 2 is positioned above the lower pan 3. An upper spatula 4 is arranged in the upper pan 2, the upper spatula 4 is pushed to move to push fried eggs to the egg outlet, and the egg naturally falls into the lower pan 3.

Specifically, a lower spatula 5 is arranged in the lower pan 3, one side of the fixing plate 1 is provided with a driving member 7, and one side of the driving member 7 is slidably provided with a sliding block 71. The sliding block 71 is fixedly arranged together with the upper spatula 4 and the lower spatula 5, and the sliding block 71 is moved by means of the driving member 7 so as to drive the lower spatula 5 to push the fried eggs out. Two driving members 7 may also be arranged to drive the upper spatula 4 and the lower spatula 5 respectively, and the driving members 7 independently control pushing of fried eggs by means of the upper spatula 4 and the lower spatula 5, and flexible adjustment is achieved, such that egg frying time of the upper pan 2 and the lower pan 3 is controlled, thereby satisfying different requirements for cooking degrees of two sides of the fried eggs.

The upper pan 2 and the lower pan 3 are provided with egg frying surfaces 8. Since most egg frying surfaces 8 of existing egg frying pans are in a flat bottom shape, moreover, fluidity of oil is poor, when the oil is poured into the egg frying surface 8 with a flat bottom, the oil liquid can not be evenly dispersed, which leads to uneven distribution of the oil on the egg frying surface 8. When eggs are cracked and egg liquid falls onto an oil-free area of the egg frying surface 8, the phenomenon of sticking to the pan will occur, and even the fried eggs will be burnt, which affects an appearance. The egg frying surface 8 is arranged in a rectangular shape and forms concave arc surfaces in a 0-X axis direction and a 0-Y axis direction, and lower end surfaces of the upper spatula 4 and the lower spatula 5 are arranged in an arc shape so as to be attached to the egg frying surface 8, such that it is ensured that skins of the fried eggs are not broken when being pushed, and the obtained fried eggs are more complete.

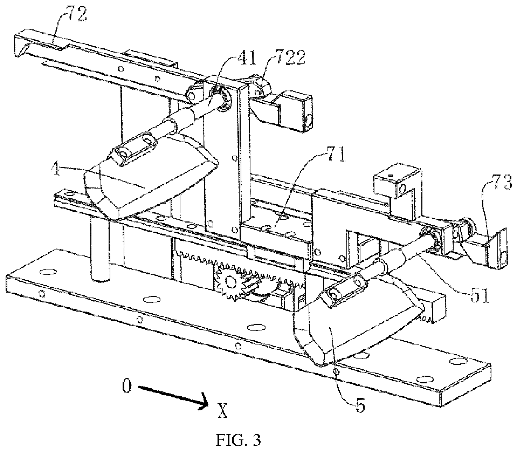

Specifically, since the egg frying surface 8 is an arc surface (as shown in FIG. 1), the shape of the egg frying surface 8 needs to be adapted to during an egg pushing process of the upper spatula 4 and the lower spatula 5. In this example, the upper spatula 4 and the lower spatula 5 are made of high-temperature-resistant silica gel materials, which can ensure that the egg frying surface 8 can be attached during the egg pushing process. In order to achieve successful egg pushing and resetting of the upper spatula 4 and the lower spatula 5, strip hole I 12 and strip hole II 13 are provided in the fixing plate 1. An upper spatula plate 41 is fixedly arranged above the upper spatula 4, and a lower spatula plate 51 is fixedly arranged above the lower spatula 5. An upper lifting avoidance device 72 and a lower lifting avoidance device 73 with the same structure are arranged on one side of the sliding block 71 (as shown in FIG. 2 and FIG. 3), and the upper lifting avoidance device 72 and the lower lifting avoidance device 73 are fixed in position. One end of the upper spatula plate 41 passes through the strip hole I 12 and is connected to the upper lifting avoidance device 72, and the other end is rotationally arranged with respect to the sliding block 71. One end of the lower spatula plate 51 passes through the strip hole II 13 and is connected to the lower lifting avoidance device 73, and the other end is rotationally arranged with respect to the sliding block 71. The sliding block 71 can drive the upper spatula plate 41 and the lower spatula plate to reciprocate in the 0-X direction in the strip hole I 12 and the strip hole II 13 respectively, the spring I 711 connected to the sliding block 71 is arranged on one side of the upper lifting avoidance device 72, and the spring II 712 fixedly connected to the sliding block 71 is arranged on one side of the lower lifting avoidance device 73. When the sliding block 71 moves in the 0-X direction and drives the upper spatula 4 and the lower spatula 5 to push the eggs along the arc surfaces of the egg frying surfaces 8, the spring I 711 keeps the upper spatula 4 rotating counterclockwise all the time, such that a lower end surface of the upper spatula 4 is always closely attached to the egg frying surface 8 of the upper pan 2. Similarly, the spring II 712 keeps the lower spatula 5 rotating counterclockwise all the time, such that a lower end surface of the lower spatula 5 is always closely attached to the egg frying surface 8 of the lower pan 3, and it is ensured that the fried eggs can be pushed out completely when the fried eggs are pushed, thus avoiding failure of egg shoveling.

The upper spatula 4 rotates with the upper spatula plate 41 as a rotation point, and the lower spatula 5 rotates with the lower spatula plate 51 as a rotation point. The upper spatula 4 rotates to be away from the egg frying surface 8 by means of the upper lifting avoidance device 72, the lower spatula 5 rotates to be away from the egg frying surface 8 by means of the lower lifting avoidance device 73, and a distance from the lower end surface of the upper spatula 4 to the egg frying surface 8 of the upper pan 2 and a distance from the lower end surface of the lower spatula 5 to the egg frying surface 8 of the lower pan 3 are adjusted.

During the resetting process of the upper spatula 4 and the lower spatula 5, the distance from the upper spatula 4 and the upper pan 2, and the distance from the lower spatula 5 to the lower pan 3 are kept by the upper spatula plate 41 and the lower spatula plate 51 by means of the upper lifting avoidance device 72 and the lower lifting avoidance device 73 respectively so as to prevent contact with the eggs in the upper pan 2 and the lower pan 3 in the resetting process, thereby avoiding scratches of the eggs or reverse pushing of the eggs. Conventional technical means such as a position-avoiding groove can also be used for arranging the lifting avoidance of the upper spatula 4 and the lower spatula 5, as long as the eggs located in the lower pan 3 can be avoided when the lower spatula 5 is reset. However, in this example, since the upper lifting avoidance device 72 and the lower lifting avoidance device 73 have the same structure, the movement of the upper lifting avoidance device 72 will be explained as an example.

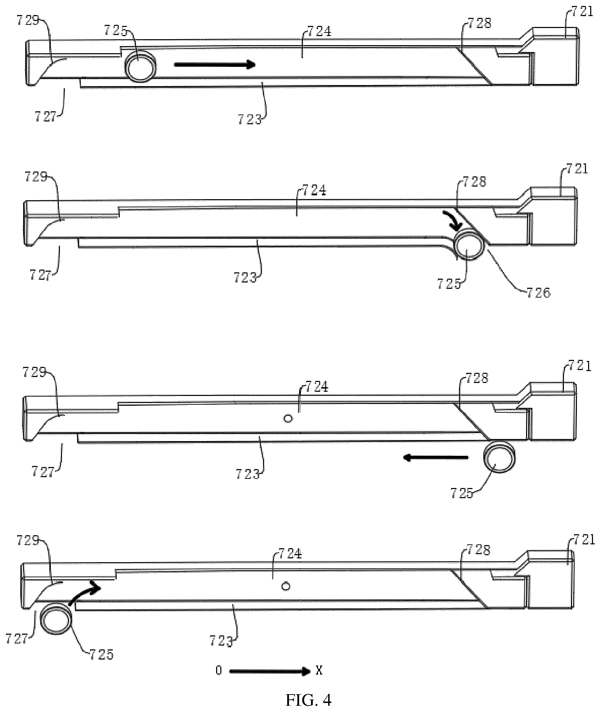

As shown in FIG. 4, the upper lifting avoidance device 72 includes guide surface I 729, a position-avoiding plate 721, a swing arm 722 and an elastic sheet 723, where a position-avoiding groove 724 is provided in the position-avoiding plate 721, and a position-avoiding inclined plane 728 and notch II 727 are arranged between the position-avoiding groove 724 and the elastic sheet 723. A roller 725 is arranged at one end of the swing arm 722, and notch I 726 is capable of being formed between the position-avoiding inclined plane 728 and the elastic sheet 723.It should be noted that the elastic sheet 723 is elastically deformable.

In a stationary state of the elastic sheet, the roller 725 is positioned at an upper end of the guide surface I 729 of the notch II 727. In this case, the lower end surface of the upper spatula 4 is not in contact with the egg frying surface of the upper pan 2, that is, a certain distance is maintained. It is ensured that the upper spatula 4 is not in contact with the high temperature egg frying surface 8 during waiting when the upper pan 2 performs egg frying, and the service life of the upper spatula 4 is greatly prolonged.

When the sliding block 71 starts to move in the 0-X direction, a track is formed between the position-avoiding groove 724 and the elastic sheet 723, and the roller 725 moves in the track. During this process, a pulling force of the spring I 711 ensures that the lower end surface of the upper spatula 4 and the arc-shaped egg frying surface of the upper pan 2 are always attached and egg pushing is achieved. When the roller 725 rolls over the position-avoiding inclined plane 728, the roller 725 presses the elastic sheet 723, such that the notch I 726 is formed between the position-avoiding inclined plane 728 and the elastic sheet 723. The roller 725 continues to roll along the position-avoiding inclined plane 728 to enlarge the notch I 726, such that the roller 725 smoothly passes through the notch I 726 until reaching the lower end surface of the elastic sheet 723 and continues to move forwards for a certain distance to be completely separated from the elastic sheet 723. During this process, the upper spatula 4 rotates counterclockwise with the upper spatula plate 41 as a rotation axis, such that the lower end surface of the upper spatula 4 is lifted, and the lower end surface of the upper spatula 4 is lifted to be away from the egg frying surface 8 of the lower pan 3, thereby completing the egg shoveling action.

When the roller 725 is attached to the lower end surface of the elastic sheet 723 and rolls to the position of the notch II 727, the distance between the lower end surface of the upper spatula 4 and the egg frying surface 8 is always maintained, thereby effectively avoiding failure of egg frying caused by reverse pushing of the eggs located in the upper pan 2 during the resetting process.

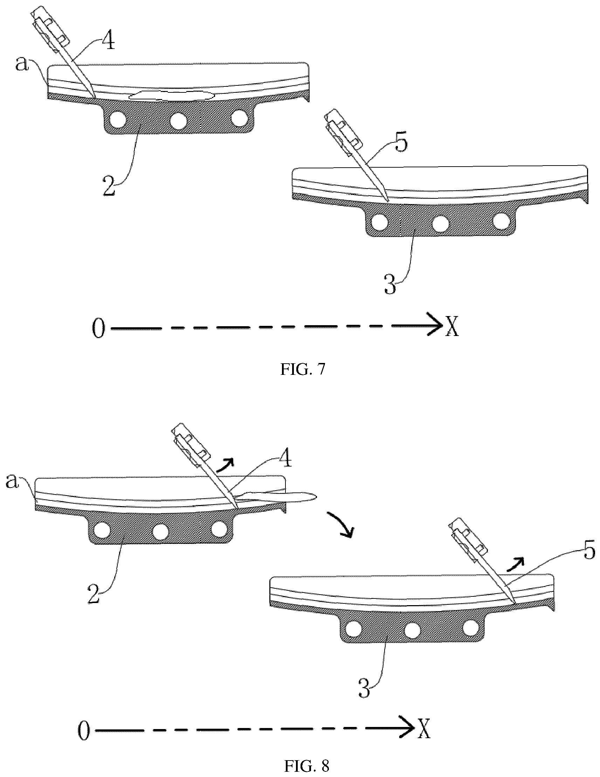

As shown in FIG. 1, the egg frying surface 8 extends upwards along a front side and a rear side of the 0-Y direction to form blocking walls 6, and the blocking walls 6 can block most of oil stains splashed during frying. The blocking walls 6 on both sides form a U-shaped opening 61. After the eggs are fried in the upper pan 2, the eggs are pushed to the U-shaped opening 61 of the egg frying surface 8 by the upper spatula 4, and directly fall into the lower pan 4 and are flipped (as shown in FIG. 8). Since the upper spatula 4 and the lower spatula 5 move synchronously, there is no need to worry about the situation that the fried eggs fall onto the lower spatula 5.

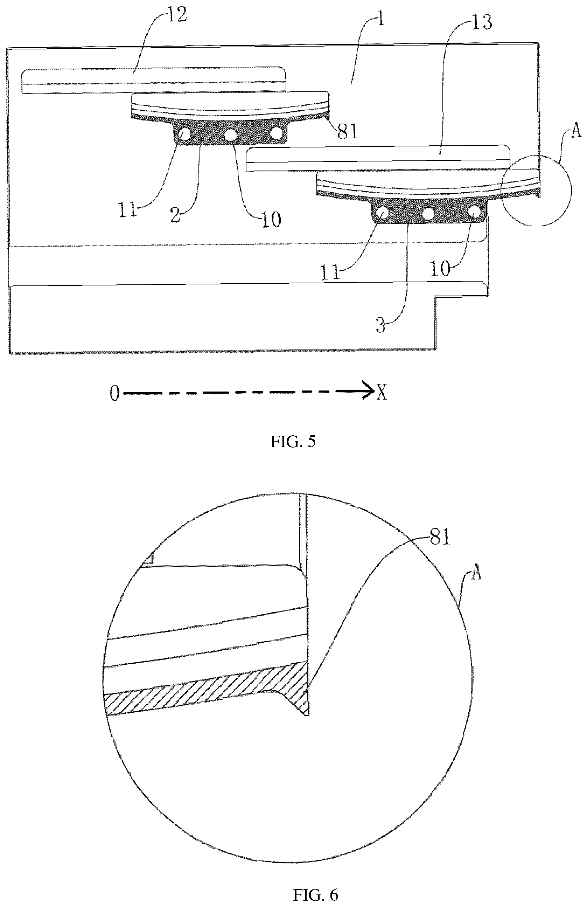

As shown in FIG. 5 and FIG. 6, when the fried egg is pushed from the egg frying surface 8 to the U-shaped opening 61 by the upper spatula 4 and the lower spatula 5, the oil pushed along with the fried egg will flow down from the U-shaped opening 61 and may directly flow to bottom surfaces of the upper pan 2 and the lower pan 3. After a long time of accumulation, the bottom surface of the upper pan 2 will form an oil scab, and when the oil scab reaches a certain thickness and hardness, the oil scab will fall into the lower pan 3 below, resulting in an unsanitary phenomenon of the fried egg, and affecting people's health. Therefore, the position of the egg frying surface 8 at the U-shaped opening 61 extends downwards to form an oil guide portion 81, and when the oil is pushed to the U-shaped opening 61 by the upper spatula 4 and the lower spatula 5, oil droplets can be formed at the oil guide portion 81 to drop into the lower pan 3, so as to indirectly add oil to the lower pan 3, thereby reducing oil consumption, and reducing the oil of the fried eggs so as to avoid influence on the taste.

Specifically, in order to achieve stability of the whole flipping process and prevent the fried eggs from falling down and accumulating into a lump shape in the lower pan 3, hardness of the fried eggs and the speed at which the upper spatula 4 and the lower spatula 5 push the eggs to be away from the upper pan 2 and the lower pan 3 can be controlled by controlling frying time. When the fried eggs are hard, the eggs can be pushed slowly, and when the fried eggs are relatively soft (but the egg surfaces are required to be in a solid form), the fried eggs can be pushed quickly, thereby achieving flipping of the fried eggs from the upper pan 2 to the lower pan 3. In this process, manual participation is not needed, and too many complex mechanical structures are also not needed, such that the use space for apparatus mounting can be saved while the labor cost is saved, and the assembly is simple.

As shown in FIG. 1, FIG. 2 and FIG. 7, heating pipe holes 10 are formed in the upper pan 2, heating pipe holes 10 are also provided in the lower pan 3, and through holes 11 with the same size and corresponding position as the heating pipe holes 10 are formed in the fixing plate 1. Heating pipes (not shown in the figure) are inserted into the two through holes 11 and placed in the heating pipe holes 10. After oil is added from position a of the upper pan 2, the heating pipes (not shown in the figure) heat the egg frying surfaces 8 of the upper pan 2 and the lower pan 3 simultaneously for frying the egg, such that an egg frying speed is improved, and egg frying time is saved. A temperature of the heating pipes (not shown in the figure) is controlled to control the frying time of the egg, and the corresponding temperature can be adjusted according to different requirements for the cooking degree of the egg, such that strong flexibility is achieved.

As shown in FIG. 7, the oil flows into most areas of the egg frying surface 8 from the position a of the egg frying surface 8 and is evenly distributed on the egg frying surface 8, then an egg is added into the upper pan 2 after cracking, and egg liquid is made to be in uniform contact with the oil, thereby avoiding the phenomenon that the egg is stuck to the pan, improving the egg frying effect, making the fried egg more beautiful, and increasing desire of consumers to purchase.

When the fried egg is pushed to the U-shaped opening 61 by the upper spatula 4 and falls downwards, since the fried egg is still hot, an oil splashing phenomenon will be generated, and numerous small drops of hot oil are dropped to surfaces of surrounding parts, such that the apparatus will be stained with the oil, apparatus failure is likely to be caused, operation is affected, and hygiene is insufficient. Therefore, when supporting and fixing the upper pan 2 and the lower pan 3, the fixing plate 1 can also block the splashed oil to prevent the falling oil drops from staining the upper lifting avoidance device 72 and the lower lifting avoidance device 73, so as to ensure normal operation of the apparatus.

A receiving plate (not shown in figure) is also arranged below the U-shaped opening 61 of the lower pan 3, which can be used for receiving the fried eggs of the lower pan 3. The lower spatula 5 pushes the fried eggs out of the U-shaped opening 61 of the lower pan 3 and falls onto the receiving plate (not shown in the figure), thereby completing the whole egg frying process.

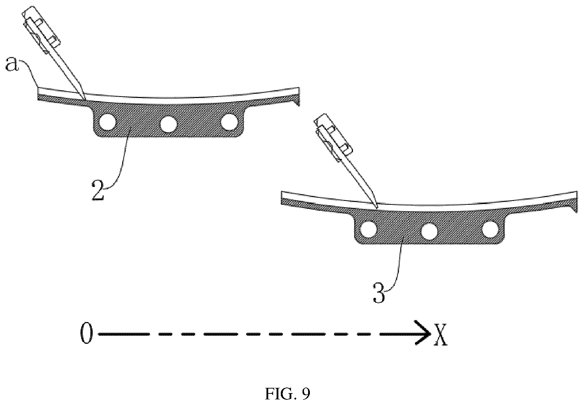

As shown in FIG. 9, Example 2 differs from Example 1 in that the egg frying surfaces 8 of the upper pan 2 and the lower pan 3 are disc-shaped. The egg frying surface 8 forms concave arc surfaces in the direction of a 0-X axis and a 0-Y axis, and the periphery of the egg frying surface 8 is of an open structure. The egg frying surface 8 can control the oil not to overflow, and can fry the egg. Moreover, the egg frying surface 8 presenting a certain arc along the 0-X axis and the 0-Y axis can make the egg appear in a sun-like shape, which is more beautiful.

For those skilled in the art, it is apparent that the present disclosure is not limited to the details of the above-mentioned exemplary examples, and the present disclosure may be implemented in other specific forms without departing from the spirit or basic features of the present disclosure. Therefore, no matter from which point of view, the examples should all be regarded as exemplary and non-limiting. The scope of the present disclosure is defined by the appended claims rather than the above-mentioned description, and therefore it is intended that all changes which fall within the meaning and scope of equivalency of the claims are embraced in the present disclosure. Any reference numeral in the claims should not be construed as limiting the related claims.

In addition, it should be understood that although the present description is described according to the embodiments, not each embodiment only contains an independent technical solution, and the specification manner of the description is only for clarity. Those skilled in the art should take the description as a whole, and the technical solutions in the examples can also be appropriately combined to form other embodiments that can be understood by those skilled in the art.

## Claims

1. An automatic egg frying mechanism with a flipping function, comprising a fixing plate (1), wherein an upper pan (2) and a lower pan (3) are fixedly arranged on the fixing plate (1), egg outlets are formed in the upper pan (2) and the low pan (3), the egg outlet of the upper pan (2) is positioned above the lower pan (3), an upper spatula (4) is arranged in the upper pan (2), and when the upper spatula (4) is pushed to push fried eggs from the egg outlet of the upper pan (2) to the lower pan (3), the fried eggs naturally fall down to achieve flipping.

2. The automatic egg frying mechanism with a flipping function according to claim 1, **characterized in that** the upper pan (2) and the lower pan (3) are provided with egg frying surfaces (8), and the egg frying surfaces (8) extend upwards along a front side and a rear side of a 0-Y direction to form blocking walls (6).

3. The automatic egg frying mechanism with a flipping function according to claim 1, **characterized in that** a periphery of the egg frying surface (8) is of an open structure.

4. The automatic egg frying mechanism with a flipping function according to claim 2, **characterized in that** the egg frying surface (8) is rectangular and forms concave arc surfaces in directions of a 0-X axis and a 0-Y axis.

5. The automatic egg frying mechanism with a flipping function according to claim 2, **characterized in that** the egg frying surface (8) is disc-shaped and forms concave circular arc surfaces in directions of a 0-X axis and a 0-Y axis.

6. The automatic egg frying mechanism with a flipping function according to claim 2, **characterized in that** a U-shaped opening (61) is formed between the blocking walls (6) on both sides, and the position at the U-shaped opening (61) extends downwards and rolls inwards to form an oil guide portion (81).

7. The automatic egg frying mechanism with a flipping function according to claim 1, **characterized in that** strip hole I (12) and strip hole II (13) are provided in the fixing plate (1), one side of the fixing plate (1) is provided with a driving member (7), one side of the driving member (7) is slidably provided with a sliding block (71), an upper spatula plate (41) is fixedly arranged above the upper spatula (4), a lower spatula (5) is arranged in the lower pan (3), a lower spatula plate (51) is fixedly arranged above the lower spatula (5), the upper spatula plate (41) is capable of passing through the strip hole I (12), the lower spatula plate (51) is capable of passing through the strip hole II (13), and the sliding block (71) drives the upper spatula (4) and the lower spatula (5) to move synchronously.

8. The automatic egg frying mechanism with a flipping function according to claim 2, **characterized in that** heating pipe holes (10) are provided at lower ends of the upper pan (2) and the lower pan (3), through holes (11) corresponding to positions of the heating pipe holes (10) are provided in the fixing plate (1), and heating pipes are mounted into the heating pipe holes (10) from the through holes (11).

9. The automatic egg frying mechanism with a flipping function according to claim 7, **characterized in that** one side of the sliding block (71) is provided with an upper lifting avoidance device (72) and a lower lifting avoidance device (73) which have the same structure, the sliding block (71) is further provided with spring I (711) and spring II (712), one end of the upper lifting avoidance device (72) is fixedly connected to the upper spatula plate (41), and one end of the lower lifting avoidance device (73) is fixedly connected to the lower spatula plate (51).

10. The automatic egg frying mechanism with a flipping function according to claim 9, wherein one side of the upper lifting avoidance device (72) is provided with the spring I (711) connected to the sliding block (71), one side of the lower lifting avoidance device (73) is provided with the spring II (712) fixedly connected to the sliding block (71), the upper lifting avoidance device (72) comprises guide surface I (729), a position-avoiding plate (721), a swing arm (722) and an elastic sheet (723), a position-avoiding groove (724) is provided in the position-avoiding plate (721), a position-avoiding inclined plane (728) and notch II (727) are arranged between the position-avoiding groove (724) and the elastic sheet (723), a roller (725) is arranged at one end of the swing arm (722), and notch I (726) is capable of being formed between the position-avoiding inclined plane (728) and the elastic sheet (723).
